# EUROPÄISCHE PATENTSCHRIFT

(11) **EP 0 898 664 B1**
(45) Veröffentlichungstag und Bekanntmachung des Hinweises auf die Patenterteilung: **20.12.2000**
(21) Anmeldenummer: 96916083.7
(22) Anmeldetag: 15.05.1996
(51) Int. Cl.: F16D 65/12, F16D 66/02

(54) **BREMSSCHEIBE**
BRAKE DISC
DISQUE DE FREIN

(43) Veröffentlichungstag der Anmeldung: 03.03.1999
(60) Teilanmeldung: 00112668.9
(73) Patentinhaber: Continental Teves AG & Co. oHG, 60488 Frankfurt (DE)
(72) Erfinder: BEER, Wilhelm, D-65428 Rüsselsheim (DE); VEITH, Christoph, D-61476 Kronberg (DE); GEHRIG, Horst, D-65719 Hofheim (DE)
(74) Vertreter: Portwich, Peter
(86) Internationale Anmeldenummer: EP9602080
(87) Internationale Veröffentlichungsnummer: WO9743559

(56) Entgegenhaltungen:
- EP-A- 0 128 758
- DE-A- 2 308 256
- FR-A- 1 527 763
- FR-A- 2 225 653
- US-A- 5 474 161

## Beschreibung

Die Erfindung betrifft eine Bremsscheibe für Scheibenbremsen, bei der zumindest eine Reibfläche mit zumindest einer Nut versehen ist.

Eine derartige Bremsscheibe ist beispielsweise aus der DE-A-2 308 256 bekannt, wo die Reibfläche der Bremsscheibe mit einer Anzahl verteilt angeordneter Rillen versehen ist, die einen kurvenförmigen Verlauf aufweisen. Die in die Reibflächen der Bremsscheibe eingebrachten Nuten dienen einerseits zur Verbesserung der Kühlung der Bremsscheibe durch Erhöhung der Kühlfläche und besserer Verwirbelung der Kühlluft und andererseits zur Verbesserung des Ansprechens der Bremse bei nasser Bremsscheibe, da auf der Bremsscheibe befindliches Wasser in den Nuten aufgenommen werden kann. Ein anderer Vorteil der Nuten besteht darin, daß man sie als Verschleißanzeige benutzen kann. Aus der DE 40 02 695 A1 ist eine derartige Bremsscheibe mit dekorativ angeordneten Nuten in den Reibflächen bekannt. Wenn die Bremsscheibe um einen Betrag abgeschliffen ist, der der Nuttiefe entspricht, so verschwinden die Nuten. Dies ermöglicht eine einfache Sichtkontrolle von außen. Wenn die Nuten nicht mehr sichtbar sind, muß die Bremsscheibe gegen eine neue ausgetauscht werden.

Ferner beschreibt die FR-A-1 527 763 eine Bremsscheibe mit einer ringförmigen Reibfläche, in die eine zickzackartige oder sinusförmige Nutanordnung eingebracht sein kann, die sich zwischen dem radial inneren und äußeren Rand der Reibringfläche ersteckt.

Die bekannten Bremsscheiben haben jedoch den Nachteil, daß die Strukturen der Nuten nur durch einen kostenaufwendigen Arbeitsgang eingebracht werden können. Im allgemeinen erfolgt die Bearbeitung eines Bremsscheibenrohlings derart, daß zuerst die Reibflächen in einer ersten Bearbeitungsmaschine geglättet werden. Danach muß die Bremsscheibe aus der ersten Bearbeitungsmaschine herausgenommen und in einem zweiten Schritt für das Einbringen der Nuten in eine Fräsmaschine eingespannt werden. Die Nuten werden dann bei nicht rotierender starrer Bremsscheibe mit der Fräsmaschine eingebracht, wobei der Fräser eine komplizierte zweidimensionale Bewegung durchführen muß.

Aufgabe der Erfindung ist es, eine verbesserte Bremsscheibe für Scheibenbremsen anzugeben, deren Fertigung insbesondere im Hinblick auf das Einbringen der Nuten kostengünstiger gestaltet werden kann.

Die Lösung der Aufgabe ergibt sich aus dem kennzeichnenden Teil des Patentanspruchs 1. Im Prinzip besteht die Lösung darin, daß der Verlauf der Nut über die Reibfläche an die Erfordernisse einer einfachen Fertigung angepaßt ist. Wenn die Nut gemäß der Erfindung eine in sich geschlossene Form ohne Anfang und Ende aufweist, die um die Bremsscheibenachse herum verläuft, so kann die Fertigung auf besonders kostengünstige Weise erfolgen. Um die erfindungsgemäße Nut zu erzeugen, braucht das spanabhebender Werkzeug nicht in einer komplizierten zweidimensionalen Bewegung geführt zu werden, sondern es genügt eine eindimensionale Hubbewegung in Kombination mit einer Rotationsbewegung der Bremsscheibe. Die erfindungsgemäße geschlossene Form der Nut ohne Anfang und Ende erlaubt eine Bearbeitung der Nut in einem einzigen Durchgang, ohne daß das Bearbeitungswerkzeug abgesetzt und wieder angesetzt werden müßte. Daraus ergibt sich eine erhebliche Zeitersparnis und wegen der dadurch bedingten besseren Auslastung der Fertigungsmaschinen auch eine erhebliche Kostenersparnis.

Je nach Rotationsgeschwindigkeit der Bremsscheibe bei der Fertigung kann sich dabei jedoch die Notwendigkeit einer hohen Frequenz für die Hubbewegung des spanabhebenden Werkzeugs ergeben, die Nachteile mit sich bringen könnte. Gemäß Anspruch 1 ist die Nut daher nach zwei oder mehr Umrundungen der Bremsscheibenachse in sich geschlossen ist. Diese Ausführungsform erlaubt eine sehr viel niedrigere Frequenz für die Hubbewegung des Werkzeugs im Verhältnis zur Rotationsfrequenz der Bremsscheibe.

Mit Anspruch 5 wird auch für ein Verfahren für die Bearbeitung von Reibflächen einer Bremsscheibe um Schutz ersucht. Mit Vorteil kann die Bremsscheibe in derselben Maschine, die auch die Reibflächen glättet, mit der erfindungsgemäßen Nut versehen werden, so daß ein Ausspannen der Bremsscheibe aus der einen Maschine und ein Einspannen in die andere zum Einbringen der Nut mit Vorteil entfallen kann. Die Bremsscheibe bleibt einfach in derselben Maschine eingespannt.

Das zum Einbringen der Nut bestimmte Werkzeug erzeugt aufgrund seines Profils die Nutkontur und aufgrund seiner Hubbewegung in Kombination mit der Rotationsbewegung der Bremsscheibe die Verlaufsform der Nut. Dabei kann das spanabhebende Werkzeug gemäß Anspruch 6 ein Fräser sein, der die Nutkontur erzeugt und die entsprechende Hubbewegung ausführt. In einer bevorzugten Ausführungsform des Verfahrens gemäß Anspruch 7 wird als spanabhebendes Werkzeug jedoch ein Formstahl mit der Nutkontur verwendet, so daß die Nut durch eine Drehoperation erzeugt wird. Bei dieser Ausführungsform ist das Werkzeug besonders einfach und kostengünstig ausgestaltet.

In einer einfachen Ausführungsform der erfindungsgemäßen Bremsscheibe gemäß Anspruch 2 weist jede Reibfläche genau eine Nut auf, die zwischen dem radial inneren und äußeren Randbereich der Reibfläche wellenförmig verläuft. Durch den wellenförmigen Verlauf wird sichergestellt, daß sich die Nut über den gesamten radialen Bereich der Reibfläche erstreckt, was insbesondere der wasseraufnehmenden Wirkung bei nasser Bremsscheibe zugute kommt. Andererseits kann die Wellenform auf besonders einfache Weise durch die genannte Hubbewegung des spanabhebenden Werkzeugs bei der Fertigung erzeugt werden.

Eine weitere Möglichkeit zur Reduzierung der Hubfrequenz des spanabhebenden Werkzeugs besteht gemäß Anspruch 3 darin, daß jede Reibfläche zwei oder mehrere Nuten aufweist, die zwischen dem radial inneren und äußeren Randbereich der Reibfläche wellenförmig verlaufen und in Drehrichtung der Bremsscheibe versetzt zueinander angeordnet sind. Jede der Nuten kann mit einer geringen Hubfrequenz erzeugt werden, während trotzdem die Dichte der über die Reibfläche verteilten Nutabschnitte höher ist als mit nur einer einzigen Nut derselben Hubfrequenz. Die Fertigung kann auch hier mit dem Verfahren gemäß einem der Ansprüche 5 bis 7 erfolgen, indem die zwei oder mehreren Nuten zeitlich hintereinander von demselben spanabhebenden Werkzeug eingebracht werden.

Wenn jedoch der zeitliche Mehraufwand für die Fertigung mehrerer Nuten wirtschaftlich ungünstiger ist als ein apparativer Mehraufwand der Fertigungsmaschine, so empfiehlt sich ein Bearbeitungsverfahren gemäß den Merkmalen des Anspruchs 8, nach dem zwei oder mehrere Nuten von zwei oder mehreren spanabhebenden Werkzeugen gleichzeitig in dieselbe Reibfläche eingebracht werden.

Ein derartiges Verfahren eignet sich insbesondere auch für eine Bremsscheibe, die gemäß den Merkmalen des Anspruchs 4 zwei oder mehrere Nuten aufweist, die in einem radialen Teilbereich der Reibfläche wellenförmig verlaufen und in radialer Richtung zueinander versetzt angeordnet sind. Bei einer solchen Anordnung der Nuten ist zwar nicht die Hubfrequenz jedoch die Hublänge für das spanabhebende Werkzeug reduziert, so daß auch bei erhöhter Frequenz keine unzulässig hohen Beschleunigungen des Werkzeugs auftreten.

In einer Weiterbildung des Verfahrens zum Einbringen der Nut gemäß Anspruch 9 ist vorgesehen, daß beide Reibflächen der Bremsscheibe gleichzeitig bearbeitet und mit Nuten versehen werden. Für diesen Zweck muß die Bearbeitungsmaschine mit paarweise gegenüberliegend angeordneten spanabhebenden Werkzeugen versehen sein. Wenn auf jeder Reibfläche beispielsweise zwei Nuten vorgesehen sind, so braucht man insgesamt vier spanabhebende Werkzeuge, von denen jeweils zwei paarweise angeordnet sind.

Ausführungsbeispiele der Erfindung werden nachfolgend anhand der Zeichnung 5 näher erläutert.

Es zeigen:
- Figur 1: eine Draufsicht auf eine dem Stand der Technik nach FR-A-1 527 763 vergleichbare Bremsscheibe in einer ersten Ausführungsform,
- Figur 2: einen Schnitt durch dieselbe Bremsscheibe,
- Figur 3: einen vergrößerten Ausschnitt aus Figur 2,
- Figur 4: einen Teilschnitt gemäß Linie A-A aus Figur 1,
- Figur 5: eine erfindungsgemäße Bremsscheibe in einer zweiten Ausführungsform,
- Figur 6: eine dem Stand der Technik vergleichbare Bremsscheibe in einer dritten Ausführungsform,
- Figur 7: eine dem Stand der Technik vergleichbare Bremsscheibe in einer vierten Ausführungsform,

Die dargestellten Bremsscheiben 1 aller Ausführungsbeispiele bestehen aus einem topfförmigen Halteabschnitt 2 und einem Reibring 3, der auf beiden Axialseiten jeweils eine Reibfläche 4,5 aufweist. Jede Reibfläche 4,5 ist mit zumindest einer Nut 6 bis 16 versehen, wobei die Nuten 6 bis 12 eine geschlossene Form ohne Anfang und Ende aufweisen und um die Bremsscheibenachse 17 herum verlaufen.

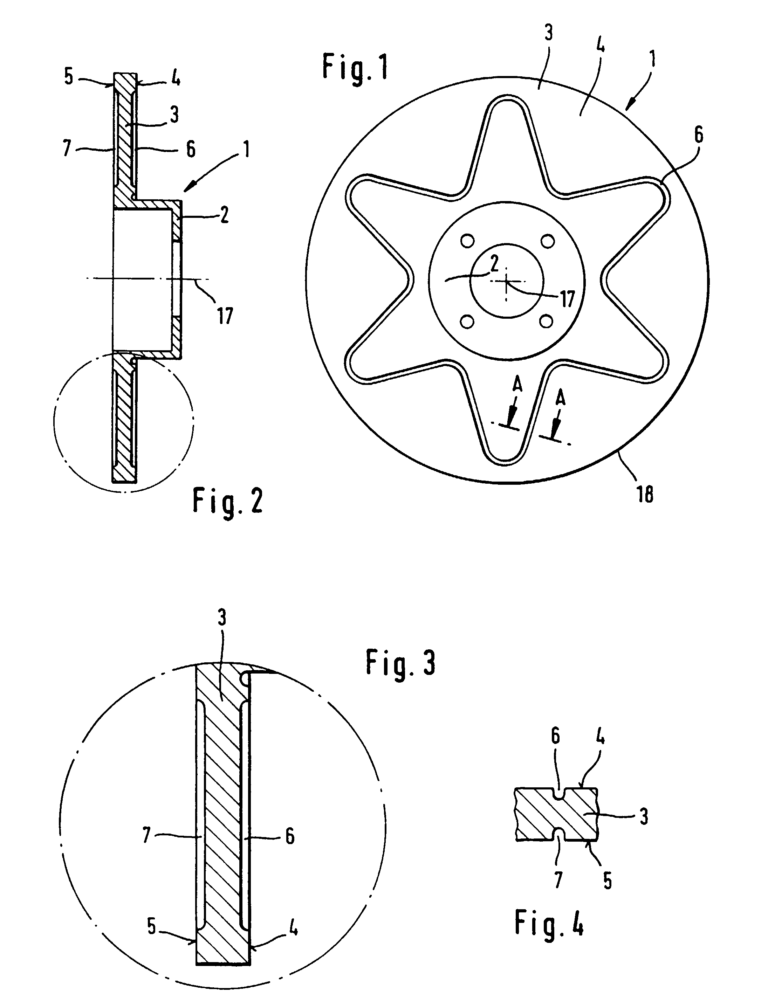

Bei dem in den Figuren 1 bis 4 gezeigten ersten Ausführungsbeispiel einer dem Stand der Technik vergleichbaren Bremsscheibe besitzt jede Reibfläche 4,5 jeweils genau eine Nut 6,7, die zwischen dem radial inneren und äußeren Randbereich 18 der Reibfläche 4,5 wellenförmig verläuft. Dabei ist die Nut 6,7 nach einer Umrundung der Bremsscheibenachse 17 in sich geschlossen.

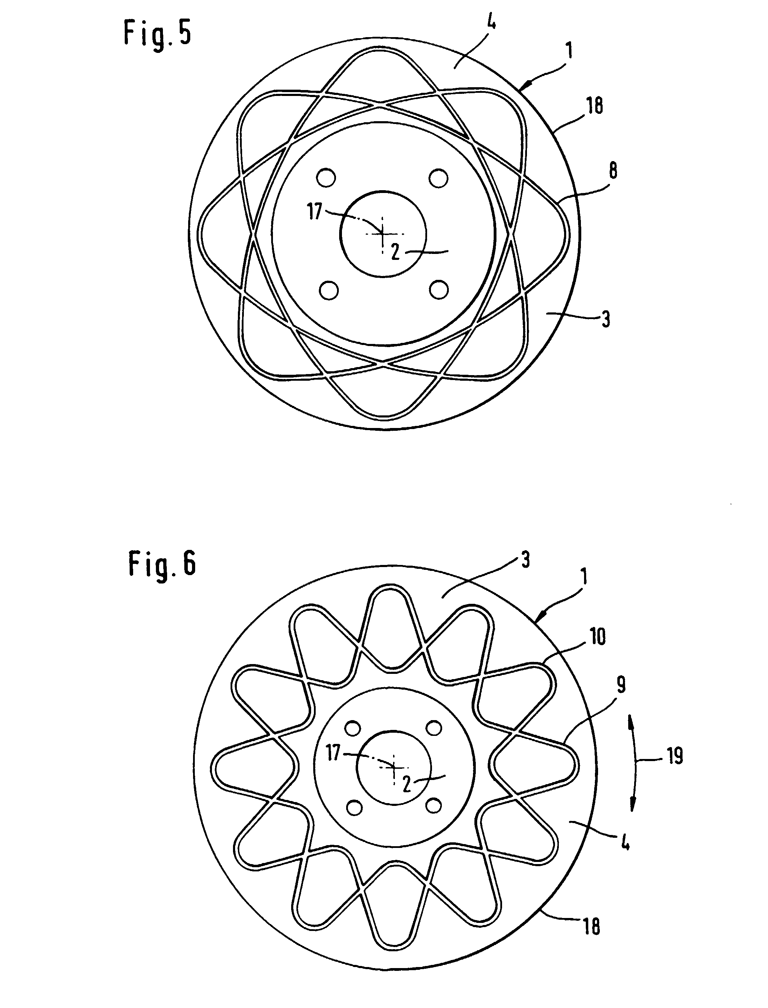

Die in Figur 5 gezeigte Ausführungsform einer erfindungsgemäßen Bremsscheibe 1 unterscheidet sich von der oben genannten darin, daß die Nut 8 erst nach drei Umrundungen der Bremsscheibenachse 17 in sich geschlossen ist. Dadurch kann die Hubfrequenz des spanabhebenden Bearbeitungswerkzeugs bei der Erzeugung der Nut 8 mit Vorteil im Verhältnis zur Rotationsfrequenz der Bremsscheibe 1 relativ gering sein.

Eine weitere Möglichkeit zur Verringerung der Hubfrequenz ist vergleichbar in Figur 6 illustriert. Hier ist jede Reibfläche 4,5 der Bremsscheibe 1 mit zwei Nuten 9,10 versehen, die zwischen dem radial inneren und äußeren Randbereich 18 der Reibfläche 4,5 wellenförmig verlaufen und in Drehrichtung 19 der Bremsscheibe 1 versetzt zueinander angeordnet sind.

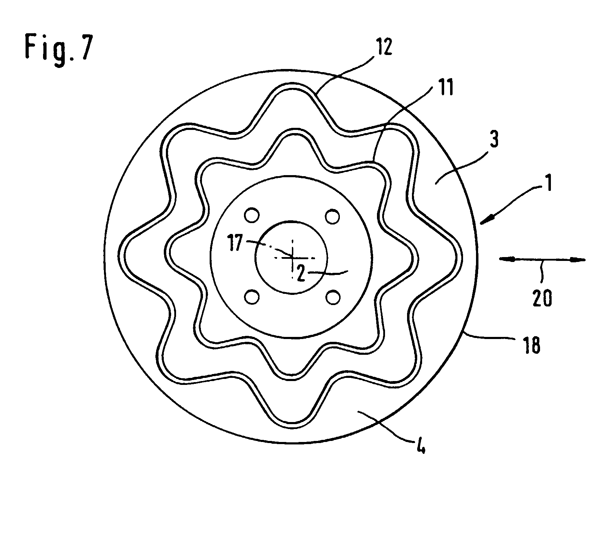

Bei der in Figur 7 gezeigten Ausführungsform besitzt jede Reibfläche 4,5 zwei Nuten 11,12 die in einem radialen Teilbereich der Reibfläche 4,5 wellenförmig verlaufen und zwischen dem radial inneren und äußeren Randbereich 18 der Reibfläche 4,5 in radialer Richtung 20 zueinander versetzt angeordnet sind. Daraus ergibt sich für die radial innere Nut 11 ein kleinerer Durchmesser und eine kleinere Länge als für die radial außen angeordnete Nut 12. Durch die Anordnung zweier Nuten 11,12 kann die Amplitude der Wellenform mit Vorteil gering gehalten werden.

Selbstverständlich kann außer der in Fig. 4 gezeigten U-förmigen Nutkontur jede andere vorteilhafte Kontur vorgesehen sein. Insbesondere wird eine V-förmige Nutkontur empfohlen, wenn sich der Reibbelagverschleiß bei U-förmiger Nutkontur als zu hoch erweisen sollte.

## Patentansprüche

1. Bremsscheibe für Scheibenbremsen, bei der zumindest eine Reibfläche (4,5) mit zumindest einer Nut (8 bis 12) versehen ist, die eine in sich geschlossene Form ohne Anfang und Ende aufweist und um die Bremsscheibenachse (17) herum verläuft, **dadurch gekennzeichnet**, daß die Nut (8) nach zwei oder mehr Umrundungen der Bremsscheibenachse (17) in sich geschlossen ist.

2. Bremsscheibe nach Anspruch 1, **dadurch gekennzeichnet,** daß jede Reibfläche (4,5) genau eine Nut (8) aufweist, die zwischen dem radial inneren und äußeren Randbereich (18) der Reibfläche (4,5) wellenförmig verläuft.

3. Bremsscheibe nach einem der vohergehenden Ansprüche, **dadurch gekennzeichnet**, daß jede Reibfläche (4,5) zwei oder mehrere Nuten (9,10) aufweist, die zwischen dem radial inneren und äußeren Randbereich (18) der Reibfläche (4,5) wellenförmig verlaufen und in Drehrichtung (19) der Bremsscheibe (1) versetzt zueinander angeordnet sind.

4. Bremsscheibe nach einem der Ansprüche 1-2, **dadurch gekennzeichnet**, daß jede Reibfläche (4,5) zwei oder mehrere Nuten (11,12) aufweist, die in einem radialen Teilbereich der Reibfläche (4,5) wellenförmig verlaufen und zwischen dem radial inneren und äußeren Randbereich (18) der Reibfläche (4,5) in radialer Richtung (20) zueinander versetzt angeordnet sind.

5. Verfahren für die Bearbeitung von Reibflächen (4,5) einer Bremsscheibe (1) nach einem der vorhergehenden Ansprüche, wobei die unbearbeitete Bremsscheibe (1) in eine Maschine eingespannt wird, die in einem ersten Bearbeitungsschritt unter Rotation der Bremsscheibe (1) die Reibflächen (4,5) glättet, **dadurch gekennzeichnet,** daß die Bremsscheibe (1) für das Einbringen zumindest einer Nut (8 bis 12) in der Maschine eingespannt bleibt und daß die Nut (8 bis 12) mittels eines spanabhebenden, die Nutkontur aufweisenden Werkzeugs in zumindest eine Reibfläche (4,5) eingebracht wird, in dem das Werkzeug lediglich eine Hubbewegung ausführt, die mit einer Rotationsbewegung der Bremsscheibe (1) zusammenwirkt, um den gewünschten Verlauf der Nut (8 bis 12) zu erzeugen.

6. Verfahren nach Anspruch 5, **dadurch gekennzeichnet**, daß als spanabhebendes Werkzeug ein Fräser verwendet wird, der die Nutkontur erzeugt.

7. Verfahren nach Anspruch 5, **dadurch gekannzeichnet**, daß als spanabhebendes Werkzeug ein Formstahl mit der Nutkontur verwendet wird und daß die Nut durch eine Dreboperation erzeugt wird.

8. Verfahren nach einem der Ansprüche 5 bis 7, **dadurch gekennzeichnet**, daß zwei oder mehrere Nuten (9 bis 12) von zwei oder mehreren spanabhebenden Werkzeugen gleichzeitig in dieselbe Reibfläche (4) eingebracht werden.

9. Verfahren nach einem der Ansprüche 5 bis 8, **dadurch gekennzeichnet**, daß beide Reibflächen (4,5) der Bramsscheibe (1) von einer der Gesamtzahl der Nuten (9 bis 12) entsprechenden Zahl von paarweise angeordneten spanabbebenden Werkzeugen gleichzeitig bearbeitet werden.

## Claims

1. Brake disc for disc brakes wherein at least one friction surface (4, 5) includes at least one groove (8 to 12), which has a closed configuration without beginning and end and extends around the brake disc axis (17),
**characterized** in that the groove (8) is closed after two or more laps around the brake disc axis (17).

2. Brake disc as claimed in claim 1,
**characterized** in that each friction surface (4, 5) has exactly one groove (8) which extends wavelike between the radially inner and outer fringe area (18) of the friction surface (4, 5).

3. Brake disc as claimed in any one of the preceding claims,
**characterized** in that each friction surface (4, 5) includes two or a plurality of grooves (9, 10) which extend like a wave between the radially inner and outer fringe area (18) of the friction surface (4, 5) and are offset relative to each other in the direction of rotation (19) of the brake disc (1).

4. Brake disc as claimed in any one of claims 1 to 2,
**characterized** in that each friction surface (4, 5) includes two or a plurality of grooves (11, 12) which extend like a wave in a radial partial area of the friction surface (4, 5) and are arranged between the radially inner and outer fringe area (18) of the friction surface (4, 5) so as to be offset relative to each other in a radial direction (20).

5. Process of machining friction surfaces (4, 5) of a brake disc (1) as claimed in any one of the preceding claims, wherein the unfinished brake disc (1) is clamped into a machine which smoothens the friction surfaces (4, 5) by rotation of the brake disc (1) in a first machining step,
**characterized** in that the brake disc (1) remains clamped in the machine for cutting at least one groove (8 to 12), and in that the groove (8 to 12) is cut into a least one friction surface (4, 5) by way of a chip-removing tool which exhibits the groove contour, the said tool performing only one stroke movement which interacts with a rotational motion of the brake disc (1) to produce the desired course of the groove (8 to 12).

6. Process as claimed in claim 5,
**characterized** in that a miller which produces the groove contour is used as a chip-removing tool.

7. Process as claimed in claim 5,
**characterized** in that a profile tool steel with the groove contour is used as a chip-removing tool, and in that the groove is produced by a turning operation.

8. Process as claimed in any one of claims 5 to 7,
**characterized** in that two or a plurality of grooves (9 to 12) are cut simultaneously into the same friction surface (4) by two or a plurality of chip-removing tools.

9. Process as claimed in any one of claims 5 to 8,
**characterized** in that both friction surfaces (4, 5) of the brake disc (1) are machined simultaneously by a number of chip-removing tools arranged in pairs, with the number of tools corresponding to the total number of the grooves (9 to 12).

## Revendications

1. Disque de frein, pour frein à disque, dans lequel au moins une surface de frottement (4, 5) comporte au moins une rainure (8 à 12) qui a une forme fermée sur elle-même, sans début, ni fin, et s'étend autour de l'axe (17) du disque de frein, caractérisé en ce que la rainure (8) se ferme sur elle-même après deux tours ou davantage effectués autour de l'axe de disque de frein (17).

2. Disque de frein suivant la revendication 1, caractérisé en ce que chaque surface de frottement (4, 5) présente exactement une rainure (8) qui s'étend d'une manière ondulée entre la zone marginale radialement intérieure et la zone marginale radialement extérieure (18) de la surface de frottement (4, 5).

3. Disque de frein suivant l'une des revendications précédentes, caractérisé en ce que chaque surface de frottement (4, 5) comporte deux rainures (9, 10) ou davantage qui s'étendent d'une manière ondulée entre la zone marginale radialement intérieure et la zone marginale radialement extérieure (18) de la surface de frottement (4, 5) et sont disposées d'une manière décalée entre elles suivant la direction de rotation (19) du disque de frein (1).

4. Disque de frein suivant l'une des revendications 1 - 2, caractérisé en ce que chaque surface de frottement (4, 5) comporte deux rainures (11, 12) ou davantage qui s'étendent d'une manière ondulée dans une zone radiale partielle de la surface de frottement (4, 5) et sont disposées entre la zone marginale radialement intérieure et la zone marginale radialement extérieure (18) de la surface de frottement (4, 5) en étant décalées entre elles suivant la direction radiale (20).

5. Procédé d'usinage de surfaces de frottement (4, 5) d' un disque de frein (1) suivant l'une des revendications précédentes, selon lequel le disque de frein (1) non usiné est fixé par bridage dans une machine qui, dans une première opération d'usinage et moyennant une rotation du disque de frein (1), dresse les surfaces de frottement (4, 5), caractérisé en ce que le disque de frein (1) reste fixé par bridage dans la machine pour la réalisation d'au moins une rainure (8 à 12) et en ce que la rainure (8 à 12) est ménagée, dans au moins une surface de frottement (4, 5), au moyen d'un outil d'enlèvement de copeaux présentant la forme profilée de la rainure, l'outil exécutant uniquement un mouvement alternatif qui coopère avec un mouvement de rotation du disque de frein (1) pour produire le tracé voulu de la rainure (8 à 12).

6. Procédé suivant la revendication 5, caractérisé en ce que, comme outil d'enlèvement de copeaux, on utilise une fraise qui produit la forme profilée de la rainure.

7. Procédé suivant la revendication 5, caractérisé en ce que, comme outil d'enlèvement de copeaux, on utilise un outil de coupe profilé présentant la forme profilée de la rainure, et en ce que la rainure est produite au moyen d'une opération de rotation.

8. Procédé suivant l'une des revendications 5 à 7, caractérisé en ce que deux rainures (9 à 12) ou davantage sont ménagées simultanément dans la même surface de frottement (4) par deux outils d'enlèvement de copeaux ou davantage.

9. Procédé suivant l'une des revendications 5 à 8, caractérisé en ce que les deux surfaces de frottement (4, 5) du disque de frein (1) sont usinées simultanément par un nombre d'outils d'enlèvement de copeaux, disposés par paires, qui correspond au nombre total des rainures (9 à 12).
